Europäisches Patentamt

(19) European Patent Office

Office européen des brevets

(11) Publication number: **0 022 360**
·**B1**

(12) **EUROPEAN PATENT SPECIFICATION**

(45) Date of publication of patent specification: **06.02.85**

(21) Application number: **80302267.2**

(22) Date of filing: **03.07.80**

(51) Int. Cl.⁴: **B 65 G 19/14, B 65 G 21/00**

(54) Conveyor or elevator for discrete materials.

(30) Priority: **10.07.79 GB 7924015**

(43) Date of publication of application:
**14.01.81 Bulletin 81/02**

(45) Publication of the grant of the patent:
**06.02.85 Bulletin 85/06**

(84) Designated Contracting States:
**AT BE CH DE FR GB IT LI LU NL SE**

(56) References cited:
**DE-U-1 898 385**
**FR-A-1 342 683**
**GB-A-1 447 169**
**GB-A-1 505 064**
**US-A-2 643 760**
**US-A-2 817 430**
**US-A-2 887 190**
**US-A-3 372 791**
**US-A-3 549 003**
**US-A-3 905 473**
**US-A-4 071 136**

(73) Proprietor: **PRODUCTION MACHINERY CO. PTY. LTD.**
**1, Bushby Street**
**Bellevue Western Australia 6056 (AU)**

(72) Inventor: **Walker, Robert Stephen**
**1, Bushby Street**
**Bellevue Western Australia 6056 (AU)**

(74) Representative: **Sheader, Brian N. et al**
**ERIC POTTER & CLARKSON 27 South Street**
**Reading Berkshire, RG1 4QU (GB)**

## Description

This invention relates to conveyors or elevators for discrete materials, e.g., granular or powder materials.

A known conveyor or elevator for discrete materials, as disclosed in French Patent Specification No. 1,342,683 or in British Patent Specification No. 1,447,169, comprises an endless flexible member having a plurality of plate-like members mounted substantially centrally thereon at spaced intervals and extending transversely to the longitudinal axis of the flexible member, the endless flexible member extending around a pair of spaced pulleys or sprockets (hereinafter termed "sprockets") at least one of which is driven, a casing surrounding one of the sprockets, a housing surrounding the other of the sprockets, and at least one tube extending between the casing and the housing through which the endless flexible member and the plate-like members pass, hopper means being associated with said casing for feeding material to be conveyed or elevated being to the spaces between successive plate-like members inside the casing as the plate-like members pass around said one sprocket and an outlet from said housing through which said material will be discharged by centrifugal action as the plate-like members pass around said other sprocket. Generally, in such a conveyor or elevator, the endless flexible member is driven at a speed of from 300 to 1200 feet per minute, preferably 600 to 1200 feet per minute, and the plate-like members are a clearance fit within the or each said tube. Such a conveyor or elevator is hereinafter referred to as "a conveyor or elevator of the kind described".

Conveyors or elevators of the kind described have proved to be extremely efficient for conveying or elevating a wide variety of discrete materials such as pharmaceuticals and chemicals in powder form, detergent powders, grain, and the like due, it is believed, to the fact that such materials readily become entrained in the current of air which is created by the passage of the plate-like members through said tube or tubes. Problems do arise, however, when a conveyor or elevator of the kind described requires to be cleaned, adjusted or repaired. Cleaning can be effected by feeding the first of a new batch of material into the conveyor or elevator to purge the conveyor or elevator of the remains of a previous batch of material, by feeding a completely different material such as wheat, which is particularly effective because of its clean grains, grain size, hardness and toughness, into the conveyor or elevator to purge it of the remains of a previous batch of material, or by blocking-off the discharge outlet of the conveyor or elevator and feeding warm water, with detergent or other cleaning agent, into the conveyor or elevator whilst it is running to wash away the remains of a previous batch of material. Whilst one or more of these different methods of cleaning the conveyor or elevator works reasonably well with most materials, there are some materials which cannot be satisfactorily cleared from the conveyor or elevator by any of these methods. Moreover, repair and maintenance work, particularly to the sprockets, sprocket shafts and shaft bearing assemblies, tends to be neglected because in order to gain access thereto it is necessary to disassemble the conveyor or elevator and remove the said casing and the said housing and this is a somewhat tedious and time-consuming process, particularly since the casing surrounding said one sprocket has attached thereto a feed hopper for feeding material into the conveyor or elevator.

The present invention has as its object to overcome or mitigate some or all of the aforesaid problems.

The present invention provides a conveyor or elevator of the kind described wherein each of said sprockets has associated therewith a sprocket shaft, shaft bearing assembly and a shaft seal and wherein each sprocket and its associated sprocket shaft, shaft bearing assembly and shaft seal comprises a removable sub-assembly; the hopper means is hingedly mounted whereby it can be hinged from an in-use position in which it is upright and operatively connected with the casing and an out-of-use position in which access is provided to the interior of the casing, through which access the sub-assembly can be removed as a unit; and the housing comprises at least one cover plate hingedly connected to the housing whereby it can be hinged from a closed to an open position to provide access to the interior of the housing, through which access the sub-assembly can be removed as a unit.

Suitable releasable means may be provided for retaining the feed hopper in its in-use position. Such releasable means may comprise, for example, suitable screw or catch means.

Likewise suitable releasable means may be provided for retaining said at least one cover plate in closed or in assembled relation to said housing. Again such releasable means may comprise suitable screw or catch means.

Providing easy access to the interiors of the casing and the housing in accordance with the present invention greatly facilitates cleaning of the conveyor or elevator since cleaning can be effected by blasting the interiors of the casing and the housing with a jet of air or by brushing the interiors of the casing and the housing and removing dislodged material by suction, e.g., using a vacuum cleaner.

By forming each of said sprockets and its associated sprocket shaft, shaft bearing assembly and shaft seal as a removable sub-assembly and providing easy access to the interiors of the casing and the housing, repair and maintenance work is greatly facilitated since each of the sub-assemblies can readily be removed and taken to a workbench or the like for repair or maintenance work to be carried out thereon. Moreover, since each sub-assembly is a complete unit it provides the means to test the sprocket shaft and bearing assembly on a workbench away from the conveyor or elevator.

A further problem which arises with conveyors or elevators of the kind described is that of ensuring that the endless flexible member is maintained at the correct tension. Due to wear and other causes the endless flexible member tends, in time, to slacken off and lose tension. Correct tensioning of the endless flexible member is necessary if the conveyor or elevator is to operate at optimum efficiency but tends to be neglected because it is such a tedious process to disassemble the conveyor or elevator to the stage where the tension of the endless flexible member can be tested and, if necessary, adjusted. Moreover, adjustment of the endless flexible member requires the exercise of a certain amount of judgement on the part of the person who is effecting the adjustment with the result that the endless flexible member is not always correctly tensioned.

To overcome this further problem the present invention provides a conveyor or elevator of the kind described having means for sensing whether or not the endless flexible member is at the correct tension.

When the endless flexible member is correctly tensioned it follows closely the profiles of the said sprockets and extends between the sprockets in substantially straight lines tangential to the sprockets. As the endless flexible member loses tension due to wear, stretching of the endless flexible member or other causes, it tends to bow out away from the sprockets before entering said tubes and assuming its straight line run between the sprockets. Said sensing means is adapted to sense the said bowing out of the endless flexible member away from the sprockets. To this end the sensing means may be mounted in said casing or in said housing adjacent a said sprocket, e.g., substantially in the region where the endless flexible member leaves the sprocket and begins its run to the other of said sprockets.

The sensing means is preferably an electrical sensing means which will provide an electrical signal either when the endless flexible member is correctly tensioned or when it is incorrectly tensioned. Such electrical signal, or the lack thereof, may be used to actuate a suitable warning device or devices, e.g., a visual indicator such as a warning light and/or or audible indicator such as an audible buzzer or other alarm.

Said sensing means and warning device or devices may be adapted to function and monitor the tension of the endless flexible member whenever the conveyor or elevator is in use or may be incorporated in a special test circuit which is only energized, e.g., as by means of a pushbutton switch, when it is required to check whether or not the endless flexible member requires adjustment.

As well as sensing when the endless flexible member is incorrectly tensioned and providing an indication thereof, the sensing means and warning device or devices also facilitates the adjustment of the endless flexible member since the tension of the endless flexible member can be adjusted until the sensing means and warning device or devices indicates that the endless flexible member is no longer incorrectly tensioned.

Alternatively, or in addition, the electrical signal from the sensing means, or the lack thereof, may be used to actuate a servomotor or other prime mover for adjusting the tension of the endless flexible member. Thus, for example, when the sensing means senses that the endless flexible member is incorrectly tensioned said servomotor or other prime mover may be actuated to adjust an adjustable one of said sprockets until such time as the sensing means senses that the correct tension has been restored to the endless flexible member.

The invention will be more particularly described with reference to the accompanying diagrammatic drawings, in which:—

Fig. 1 is a partially exploded perspective view of a conveyor or elevator according to the present invention,

Fig. 2 is a fragmentary view showing a correctly tensioned endless flexible member extending around a pair of spaced sprockets,

Fig. 3 is a view similar to Fig. 2 but showing an incorrectly tensioned endless flexible member, and

Fig. 4 is a cross-sectional elevation of a removable sprocket sub-assembly of the conveyor or elevator of Fig. 1.

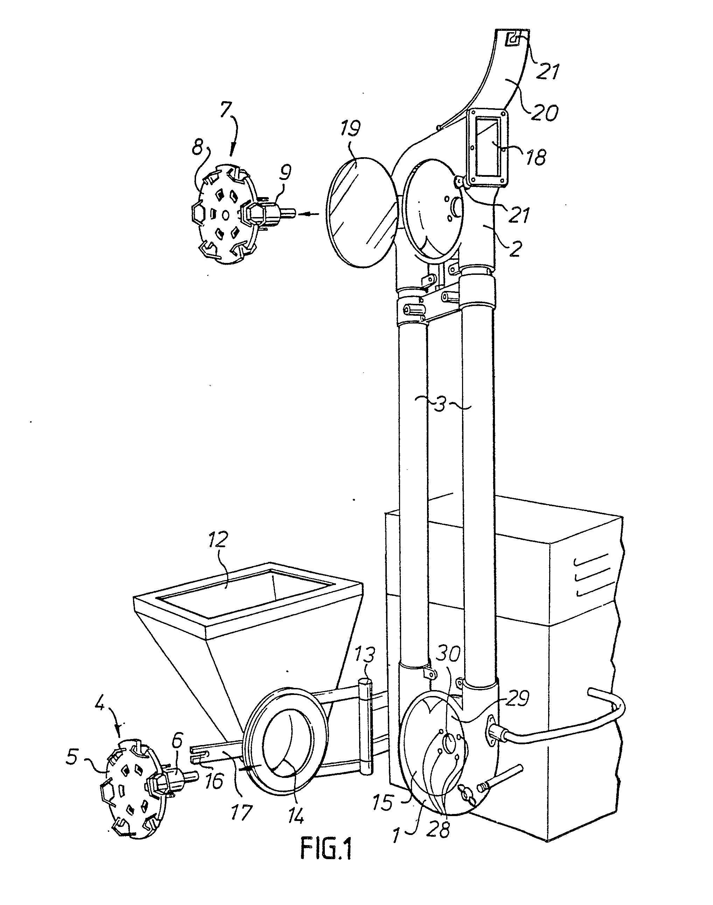

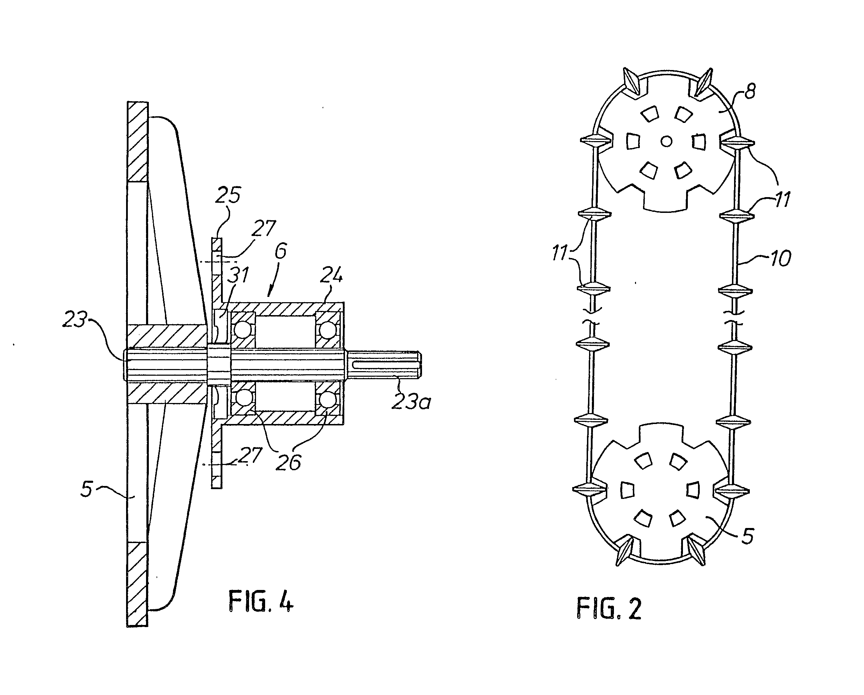

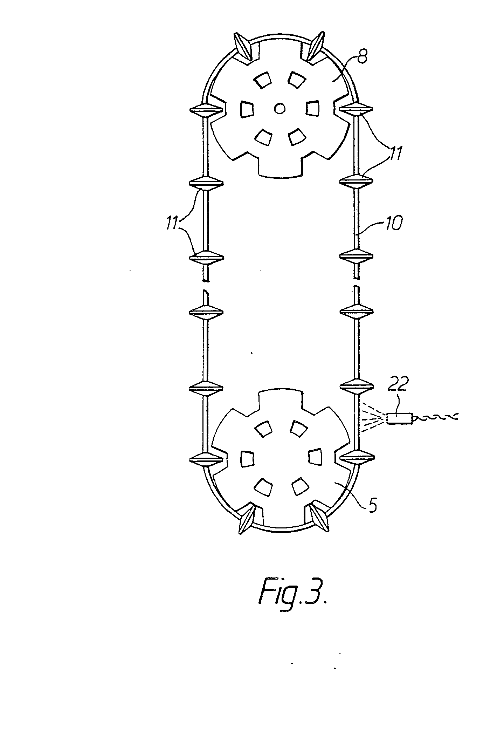

Referring to the drawings, and particularly to Figs. 1 and 4, it will be seen that the conveyor or elevator illustrated comprises a casing 1 and a housing 2 which are connected together by substantially parallel tubes 3. Mounted within the casing 1 is a removable sprocket sub-assembly 4 comprising a sprocket 5 and a bearing assembly 6 whilst mounted within the housing 2 is a similar removable sprocket sub-assembly 7 comprising a sprocket 8 and a bearing assembly 9. Extending around the sprockets 5 and 8 and through the tubes 3 is an endless flexible member 10 (Figs. 2 and 3) having a plurality of plate-like members 11 mounted substantially centrally thereon at spaced intervals and extending transversely to the longitudinal axis of the endless flexible member.

The removable sub-assemblies 4 and 7 are similar to one another. Thus whilst the sub-assembly 4 is illustrated in Fig. 4 and described hereinafter it will be understood that this illustration and description applies equally to the sub-assembly 7.

The sub-assembly 4 illustrated in Fig. 4 comprises the sprocket 5 and bearing assembly 6 above referred to. Sprocket 5 is fixedly secured to a shaft 23 rotatable in bearing assembly 6. Bearing assembly 6 comprises a cylindrical housing 24 having a flange 25 extending radially outwardly thereof at that end thereof adjacent the sprocket 5. Mounted within housing 24 and rotatably supporting shaft 23 are spaced ball or roller bearings 26. Flange 25 has bolt holes 27 therein which can be aligned with bolt holes 28 in the rear wall 29 of casing 1 whereby the sub-assembly 4 can be releasably secured within casing 1 by means of nut and bolt connectors (not shown). An aperture 30 is provided in the wall 29 of casing 1 to accommodate the bearing housing 24. A shaft seal 31 is interposed between shaft 23 and bearing housing 24.

On of the sprockets 5 or 8 is a driven sprocket whilst the other is an idler sprocket. The drive to the driven sprocket is by way of a vee-belt from a pulley driven by a suitable prime mover, such as an electric motor, to a pulley mounted on the shaft of the driven sprocket. Thus, if the driven sprocket is to be the sprocket 5 then a vee pulley (not shown) will be removably secured on the end portion 23a of shaft 23 and a vee belt will be provided to transmit drive from the pulley (not shown) of the prime mover.

The casing 1 has a feed hopper 12 connected thereto by means of a hinge 13, the feed hopper 12 being shown in its out-of-use position in Fig. 1. When in its in-use position an outlet opening 14 at the bottom of the feed hopper 12 is aligned with an inlet opening 15 in the casing 1. The feed hopper 12 is securable in its in-use position by means of a screw-threaded stud on the casing 1 which engages an open-ended slot 16 in an arm 17 attached to the feed hopper 12, a butterfly or other suitable nut being threaded onto the stud. When the hopper 12 is in its out-of-use position indicated access can readily be had to the interior of the casing 1 either for cleaning the interior of the casing or for inspection, maintenance, repair or removal of the sub-assembly 4.

The housing 2 has a discharge opening 18 therein through which discrete material which has been conveyed or elevated is discharged by centrifugal action. The housing 2 comprises a hinged front cover plate 19 and a hinged top cover plate 20, both of which can be hinged open as shown in Fig. 1 to allow ready access to the interior of the housing 2. The cover plates 19 and 20 are provided with catches 21 or other suitable releasable means for retaining them in their closed position.

Mounted in the casing 1 adjacent the sprocket 5 is an electrical sensing means 22 for sensing whether or not the endless flexible member 10 is correctly tensioned. When the endless flexible member 10 is correctly tensioned then as shown in Fig. 2 it follows closely the profile of the sprockets 5 and 8 and extends in substantially straight lines between the sprockets. As the endless flexible member 10 loses tension so it tends to bow out away from the sprockets 5 and 8 as shown in Fig. 3. The sensing means 22 is a proximity sensor and senses this bowing out of the endless flexible member by sensing when the plate-like members 11 are passing within a predetermined proximity thereto. The sensing means 22 then provides an electrical signal which is used either to actuate an alarm or indicator device, e.g., a warning lamp and/or to actuate a servomotor or other prime mover for restoring tension in the endless flexible member 10.

## Claims

1. A conveyor or elevator comprising an endless flexible member (10) having a plurality of plate-like members (11) mounted substantially centrally thereon at spaced intervals and extending transversely to the longitudinal axis of the flexible member, the endless flexible member extending around a pair of spaced pulleys or sprockets (5, 8) (hereinafter termed "sprockets") at least one of which is driven, a casing (1) surrounding one of the sprockets a housing (2) surrounding the other of the sprockets, at least one tube (3) extending between the casing and the housing through which the endless flexible member and the plate-like members pass, hopper means (12) associated with said casing (1) for feeding material to be conveyed or elevated to the spaces between successive plate-like members inside the casing as the plate-like members pass around said one sprocket (5) and an outlet (18) from said housing (2) through which said material will be discharged by centrifugal action as the plate-like members pass around said other sprocket (8); characterised in that each of said sprockets (5, 8) has associated therewith a sprocket shaft (23), shaft bearing assembly (6, 9) and a shaft seal (31) and wherein each sprocket and its associated sprocket shaft, shaft bearing assembly and shaft seal comprises a removable sub-assembly (4, 7); the hopper means (12) is hingedly mounted whereby it can be hinged from an in-use position in which it is upright and operatively connected with the casing (1) and an out-of-use position in which access is provided to the interior of the casing (1), through which access the sub-assembly (4) can be removed as a unit; and the housing (2) comprises at least one cover plate (19) hingedly connected to the housing whereby it can be hinged from a closed to an open position to provide access to the interior of the housing, through which access the sub-assembly (7) can be removed as a unit.

2. A conveyor or elevator according to claim 1, further characterised in that the hopper means (12) is hingedly connected to the conveyor or elevator adjacent said casing (1) and comprises a circular outlet opening (14) at a bottom portion thereof which cooperates with a circular inlet opening (15) of said casing (1) when the hopper means (12) is in its in-use position, and releasable means (17) provided for releasably retaining the hopper means (12) in its in-use position.

3. A conveyor or elevator according to either of the preceding claims, further characterised by means (22) mounted in said casing (1) or in said housing (2) adjacent a said sprocket (5, 8) adapted to sense whether or not the endless flexible member (10) is at the correct tension by detecting excessive bowing of the endless flexible member away from the said sprocket.

4. A conveyor or elevator according to claim 3, further characterised in that the sensing means (22) is an electrical sensing means which will provide an electrical signal either when the endless flexible member (10) is correctly tensioned or when it is incorrectly tensioned, and said electrical signal, or the lack thereof, is used to actuate a warning device or devices.

5. A conveyor or elevator according to claim 3, further characterised in that the sensing means (22) is an electrical sensing means which will provide an electrical signal either when the endless flexible member (10) is correctly tensioned or when it is incorrectly tensioned, and said electrical signal, or lack thereof, is used to actuate means for adjusting said at least one sprocket to adjust the tension of the endless flexible member.

**Revendications**

1. Convoyeur ou élévateur comportant un élément souple sans fin (10) sur lequel sont montés de nombreux éléments analogues à des plaques (11), sensiblement au centre de ceux-ci, à intervalles espacés et transversalement à l'axe longitudinal de l'élément souple, cet élément souple sans fin s'étendant autour de deux poulies ou roues de chaîne espacées (5, 8) (appelées ci-après "roues de chaîne") dont au moins l'une est entraînée, un caisson (1) entourant l'une des roues de chaîne, un carter (2) entourant l'autre roue de chaîne, un tube au moins (3) s'étendant entre le caisson et le carter, l'élément souple sans fin et les éléments analogues à des plaques traversant ce tube, des moyens de trémie (12) associés au caisson (1) pour amener le matériau à convoyer ou à élever dans les espaces compris entre les éléments successifs analogues à des plaques à l'intérieur du caisson lorsque ces éléments analogues à des plaques passent autour de la roue de chaîne (5), et une sor- (18) de ce carter (2), à travers laquelle le matériau est évacué par action centrifuge lorsque les éléments analogues à des plaques passent autour de la deuxième roue de chaîne (8), caractérisé en ce que, à chacune des roues de chaîne (5, 8) sont associés un arbre de roue (23), un ensemble de palier d'arbre (6, 9) et un joint d'arbre (31) et en ce que chaque roue et son arbre de roue, son ensemble de palier d'arbre et son joint d'arbre associés constituent un sous-ensemble amovible (4, 7), en ce que la trémie (12) est montée de façon articulée, d'où il résulte qu'elle peut être pivotée depuis une position de service dans laquelle elle est verticale et fonctionnellement raccordée au caisson (1) et une position hors de service dans laquelle on peut accéder à l'intérieur du caisson (1), le sous-ensemble (4) pouvant être enlevé d'un bloc à travers cet accès à l'intérieur; et en ce que le carter (2) comporte au moins un couvercle (19) relié de façon articulée au carter, d'où il résulte qu'il peut être pivoté d'une position fermée à une position ouverte pour permettre d'accéder à l'intérieur du carter, le sous-ensemble (7) pouvant être enlevé d'un bloc à travers cet accès à l'intérieur.

2. Convoyeur ou élévateur selon la revendication 1, caractérisé en ce que la trémie (12) est raccordée de façon articulée au convoyeur ou élévateur au voisinage du caisson (1) et qu'elle comprend une ouverture de sortie circulaire (14) dans une portion inférieure, ouverture qui coopère avec une ouverture d'entrée circulaire (15) du caisson (1) lorsque la trémie (12) est dans sa position de service, et des moyens libérables (17) prévus pour retenir de façon amovible la trémie (12) dans sa position de service.

3. Convoyeur ou élévateur selon l'une des revendications précédentes, caractérisé en ce que des moyens (22) sont montés dans le caisson (1) ou dans le carter (2) au voisinage d'une roue de chaîne (5, 8) et sont adaptés pour détecter si oui ou non l'élément souple sans fin (10) est tendu de façon correcte, en détectant l'incurvation excessive de l'élément souple sans fin l'éloignant de la roue.

4. Convoyeur ou élévateur selon la revendication 3, caractérisé en ce que les moyens de détection (22) sont des moyens de détection électriques, qui fournissent un signal électrique, soit lorsque l'élément souple sans fin (10) est correctement tendu, soit lorsqu'il est incorrectement tendu, ce signal électrique, ou son absence, étant utilisé pour actionner un ou plusieurs dispositifs d'avertissement.

5. Convoyeur ou élévateur selon la revendication 3, caractérisé en ce que les moyens de détection (22) sont des moyens de détection électriques qui fournissent un signal électrique, soit lorsque l'élément souple sans fin (10) est correctement tendu, soit lorsqu'il est incorrectement tendu, ce signal électrique, ou son absence, étant utilisé pour actionner des moyens pour régler au moins une roue pour régler la tension de l'élément souple sans fin.

**Patentansprüche**

1. Förder- oder Hebevorrichtung, aufweisend ein endloses, flexibles Teil (10) mit einer Vielzahl von plattenförmigen Teilen (11), die im wesentlichen mittig an ihm in Abständen voneinander befestigt sind und sich quer zur Längsachse des flexiblen Teils erstrecken, wobei sich das endlose flexible Teil um ein Paar, im Abstand voneinander angeordnete Riemenscheiben oder Zahnscheiben (5, 8) erstreckt (im folgenden Zahnscheiben genannt), von denen wenigstens eine angetrieben ist, wobei eine Verkleidung (1) eine der Zahnscheiben umgibt und ein Gehäuse (2) die andere Zahnscheibe umgibt, und wenigstens ein Rohr sich zwischen der Verkleidung und dem Gehäuse erstreckt, durch welches das endlose flexible Teil und die plattenförmigen Teile laufen, wobei eine Vorratsschurre (12) der Verkleidung (1) zugeordnet ist, um zu fördernde oder zu hebende Stoffe den Räumen zwischen aufeinanderfolgenden plattenförmigen Teilen innerhalb der Verkleidung zuzuführen, wenn die plattenförmigen Teile um die Zahnscheibe (5) laufen und ein Auslaß (18) am Gehäuse (2) vorgesehen ist, durch den die Stoffe durch Zentrifugalwirkung abgegeben werden, wenn die plattenförmigen Teile um die andere Zahnscheibe (8) laufen, dadurch gekennzeichnet, daß jeder Zahnscheibe (5, 8) eine Zahnscheibenwelle (23), eine Wellenlageranordnung (6, 9) und eine Wellendichtung (31) zugeordnet ist, wobei jede Zahnscheibe mit der zugehörigen Zahnscheibenwelle, der Wellenlageranordnung und der Wellendichtung eine abnehmbare Untereinheit (4, 7) aufweist; daß die Vorratsschurre (12) drehbar derart angeordnet ist, daß sie von einer Einsatzstellung, in der sie aufrecht, ist und wirksam mit der Verkleidung (1) verbunden ist, in eine Außer-Einsatzstellung verdreht werden kann, in der ein Zugang zum Inneren der Verkleidung (1) frei ist, durch den die Untereinheit (4) als Bauteil entfernt werden kann; und daß das Gehäuse (2) wenigstens eine Deckplatte (19) aufweist, die drehbar mit dem Gehäuse verbunden ist, so daß sie aus einer geschlossenen in eine offene Stellung verdreht werden kann, um einen Zugang zum Inneren des Gehäuses zu schaffen, durch den die Untereinheit (7) als Bauteil entfernt werden kann.

2. Förder- oder Hebevorrichtung nach Anspruch 1, ferner dadurch gekennzeichnet, daß die Vorratsschurre (12) drehbar mit der Förder- oder Hebevorrichtung in der Nähe der Verkleidung (1) verbunden ist, und eine kreisförmige Auslaßöffnung (14) in ihrem Bodenbereich aufweist, die mit einer kreisförmigen Einlaßöffnung (15) der Verkleidung (1) zusammenwirkt, wenn die Vorratsschurre (12) in ihrer Einsatzstellung ist, wobei eine Trennvorrichtung (17) vorgesehen ist, um die Vorratsschurre (12) in ihrer Einsatzstellung zu halten.

3. Förder- oder Hebevorrichtung nach einem der vorhergehenden Ansprüche, ferner gekennzeichnet durch eine anordnung (22), die in der Verkleidung (1) oder im Gehäuse (2) in der Nähe der Zahnscheibe (5, 8) angeordnet ist, um zu fühlen, ob das endlose flexible Teil (10) die korrekte Spannung aufweist oder nicht durch Messen von übermäßiger Verformung des endlosen flexiblen Teils von den Zahnscheiben weg.

4. Förder- oder Hebevorrichtung nach Anspruch 3, dadurch gekennzeichnet, daß die Fühleranordnung (22) eine elektrische Fühleranordnung ist, die ein elektrisches Signal erzeugt, entweder wenn das endlose flexible Teil (10) korrekt gespannt ist oder wenn es nicht korrekt gespannt ist und daß das elektrische Signal oder sein Fehlen verwendet wird, um eine Warnanordnung oder -anordnungen zu betätigen.

5. Förder- oder Hebevorrichtung nach Anspruch 3, ferner dadurch gekennzeichnet, daß die Fühleranordnung (22) eine elektrische Fühleranordnung ist, die ein elektrisches Signal erzeugt, entweder wenn das endlose flexible Teil (10) korrekt gespannt ist oder wenn es nicht korrekt gespannt ist und daß das elektrische Signal oder sein Fehlen dazu verwendet wird, eine Anordung zu betätigen zum Einstellen wenigstens einer der Zahnscheiben, um die Spannung des endlosen flexiblen Teils einzustellen.

FIG.1

FIG. 2

FIG. 4

Fig.3.